(19) Europäisches Patentamt
European Patent Office
Office européen des brevets

(11) **EP 4 535 041 A1**

(12) **EUROPEAN PATENT APPLICATION**
published in accordance with Art. 153(4) EPC

(43) Date of publication:
**09.04.2025 Bulletin 2025/15**

(21) Application number: **23815626.9**

(22) Date of filing: **24.04.2023**

(51) International Patent Classification (IPC):
***G01S 19/20*** (2010.01)   ***G01S 19/23*** (2010.01)

(52) Cooperative Patent Classification (CPC):
**G01S 19/20; G01S 19/23**

(86) International application number:
**PCT/JP2023/016179**

(87) International publication number:
**WO 2023/233865 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.06.2022 JP 2022089403**

(71) Applicant: **FURUNO ELECTRIC CO., LTD.**
**Nishinomiya-City, Hyogo 662-8580 (JP)**

(72) Inventor: **ENDO, Masaaki**
**Nishinomiya-City, Hyogo 662-8580 (JP)**

(74) Representative: **Cleveland Scott York**
**5 Norwich Street**
**London EC4A 1DR (GB)**

(54) **POSITION MEASUREMENT DEVICE, POSITION MEASUREMENT METHOD, AND POSITION MEASUREMENT PROGRAM**

(57)   One purpose of the present disclosure is to calculate a highly reliable accuracy index using only GNSS signals. A positioning device 10 includes a receiver 20, a positioning processor 30, an individual accuracy index calculator 41, and an integrated accuracy index calculator 42. The receiver 20 receives positioning signals from a plurality of positioning satellites SAT. The positioning processor 30 performs positioning calculation using the received positioning signals. The individual accuracy index calculator 41 calculates a plurality of different individual accuracy indexes based on an error covariance matrix used for the positioning calculation, a carrier phase by the positioning signal, and a positioning result by the positioning calculation, respectively. The integrated accuracy index calculator 42 calculates an integrated accuracy index using the plurality of individual accuracy indexes.

FIG. 1

**Description**

TECHNICAL FIELD

The present disclosure relates to a technique for calculating an accuracy index (protection level) of positioning.

BACKGROUND ART

Conventionally, various techniques for calculating an accuracy index of positioning are devised.
For example, in Patent Document 1, an integrative accuracy index is calculated using an accuracy index supposing abnormalities of GNSS satellites, an accuracy index supposing abnormalities of an IMU, and an accuracy index which does not assume abnormalities of the IMU.

[Reference Document(s) of Conventional Art]

[Patent Document]

[Patent Document 1] US10,466,362B1

SUMMARY OF THE DISCLOSURE

[Problem(s) to be Solved by the Disclosure]

Note that in the method of calculating the accuracy index of Patent Document 1, an element other than positioning signals of GNSS is required. Further, in other conventional calculation methods of the accuracy index, it is difficult to calculate the reliable accuracy index.
Therefore, one purpose of the present disclosure is to calculate a reliable accuracy index only using GNSS signals.

[Summary of the Disclosure]

A positioning device according to the present disclosure includes a receiver, a positioning processor, an individual accuracy index calculator, and an integrated accuracy index calculator. The receiver receives positioning signals from a plurality of positioning satellites. The positioning processor performs positioning calculation using the received positioning signals. The individual accuracy index calculator calculates a plurality of different individual accuracy indexes based on an error covariance matrix used for the positioning calculation, a carrier phase by the positioning signal, or a positioning result by the positioning calculation, respectively. The integrated accuracy index calculator calculates an integrated accuracy index using the plurality of individual accuracy indexes.
According to this configuration, the plurality of different individual accuracy indexes are calculated using only GNSS positioning signals, and the integrated accuracy index is calculated from these individual accuracy indexes. Therefore, the positioning device of the present disclosure can calculate a highly reliable accuracy index only using GNSS signals.
Further, in the positioning device of the present disclosure, the integrated accuracy index calculator may calculate a plurality of kinds of additional values by adding up a plurality of combinations of the individual accuracy indexes. The integrated accuracy index calculator may calculate the maximum value of the plurality of kinds of additional values, and use the maximum value as the integrated accuracy index.
According to this configuration, it is possible to reduce the complexity of the calculation processing of the integrated accuracy index, while suppressing decrease in the reliability of the accuracy index.
Further, in the positioning device of the present disclosure, the individual accuracy index calculator may calculate, as the plurality of individual accuracy indexes, a first accuracy index using the error covariance matrix, a second accuracy index using a residual based on a carrier phase of the positioning signal, and a third accuracy index using Solution Separation based on the positioning result.
According to this configuration, since the integrated accuracy index is calculated based on the three kinds of individual accuracy indexes with different characteristics, high reliability is achieved.
Further, in the positioning device of the present disclosure, the individual accuracy index calculator may calculate a fourth accuracy index using the error covariance matrix from which the plurality of positioning satellites excluded when calculating the third accuracy index are excluded. The integrated accuracy index calculator may calculate a first additional value obtained by adding the first accuracy index to the second accuracy index, and a second additional value obtained by adding the third accuracy index to the fourth accuracy index, and set the maximum value when comparing the first additional value with the second additional value, as the integrated accuracy index.

This configuration indicates a more concrete calculation method of the integrated accuracy index, and such a calculation method enables to calculate a highly reliable accuracy index.

Further, in the positioning device of the present disclosure, the integrated accuracy index calculator may calculate the integrated accuracy index by adding the first accuracy index to the maximum value when comparing the second accuracy index with the third accuracy index.

This configuration indicates a more concrete calculation method of the integrated accuracy index, and such a calculation method enables to calculate a highly reliable accuracy index.

Further, in the positioning device of the present disclosure, the individual accuracy index calculator may calculate a degree of influence to the positioning error by the residual and a geometric arrangement of the positioning satellites corresponding to the residual, for the plurality of positioning satellites. The individual accuracy index calculator may calculate the second accuracy index using the degrees of influence of the plurality of positioning satellites.

According to this configuration, the second individual accuracy index can be calculated with high reliability.

Further, in the positioning device of the present disclosure, the positioning processor may set a plurality of kinds of groups of positioning satellites from which different specific positioning satellites are excluded from all the positioning satellites of the plurality of positioning satellites, and the positioning processor may calculate positioning results by the positioning signals of the all positioning satellites and positioning results by the positioning signals of the plurality of kinds of groups of positioning satellites. The individual accuracy index calculator may calculate differences between the positioning results by the positioning signals of the all positioning satellites and the positioning results by the positioning signals of the plurality of kinds of groups of positioning satellites, respectively, and calculate the third accuracy index using the difference for every group.

According to this configuration, the third accuracy index can be calculated with a simple processing by using the information on the positions of the positioning device.

Further, in the positioning device of the present disclosure, the plurality of positioning satellites to exclude may be set per system of GNSS. Moreover, in the positioning device of the present disclosure, the plurality of positioning satellites to exclude may be set based on a satellite number of the corresponding system of GNSS.

These configurations indicate concrete examples of the method of calculating the third accuracy index.

Further, in the positioning device of the present disclosure, the positioning processor may include a main processor which performs positioning calculation using the positioning signals from the all positioning satellites, and a sub processor which performs positioning calculation using the positioning signals from the plurality of kinds of groups of positioning satellites from which the specific positioning satellites are excluded. The sub processor may be a processor common to the plurality of kinds of groups, and may sequentially perform the positioning calculation using the positioning signals from the plurality of kinds of groups of positioning satellites for every group.

According to this configuration, the number of sub processors for calculating the plurality of positional results used in the calculation of the third individual accuracy index can be reduced.

Further, in the positioning device of the present disclosure, the integrated accuracy index calculator may calculate the integrated accuracy index by adding the plurality of individual accuracy indexes. According to this configuration, the integrated accuracy index can be calculated by a simple calculation operation.

BRIEF DESCRIPTION OF DRAWINGS

Fig. 1 is a lineblock diagram of a positioning system including a positioning device according to a first embodiment of the present disclosure.
Figs. 2(A), 2(B), 2(C), and 2(D) are Stamford diagrams illustrating a relationship between a horizontal error and an accuracy index.
Fig. 3 is a flowchart illustrating a positioning method according to the first embodiment of the present disclosure.
Fig. 4 is a flowchart illustrating a method of calculating an individual accuracy index according to the first embodiment of the present disclosure.
Fig. 5 is a flowchart illustrating a method of calculating an integrated accuracy index according to the first embodiment of the present disclosure.
Fig. 6 is a flowchart illustrating a method of calculating the individual accuracy index according to a second embodiment of the present disclosure.
Fig. 7 is a flowchart illustrating a method of calculating the integrated accuracy index according to the second embodiment of the present disclosure.
Figs. 8(A) and 8(B) are Stamford diagrams illustrating a relationship between a horizontal error and an accuracy index in the configuration of the second embodiment.

Fig. 9 is a flowchart illustrating one example of a method of calculating the individual accuracy index according to a third embodiment.

Fig. 10 is a flowchart illustrating one example of a method of calculating the individual accuracy index according to a fourth embodiment.

Fig. 11 is a view illustrating the concept of processing of a sub filter and the calculation concept of an accuracy index HPL(SS) according to the fourth embodiment.

MODE(S) FOR CARRYING OUT THE DISCLOSURE

[FIRST EMBODIMENT]

A positioning technique according to a first embodiment of the present disclosure is described with reference to the drawings.

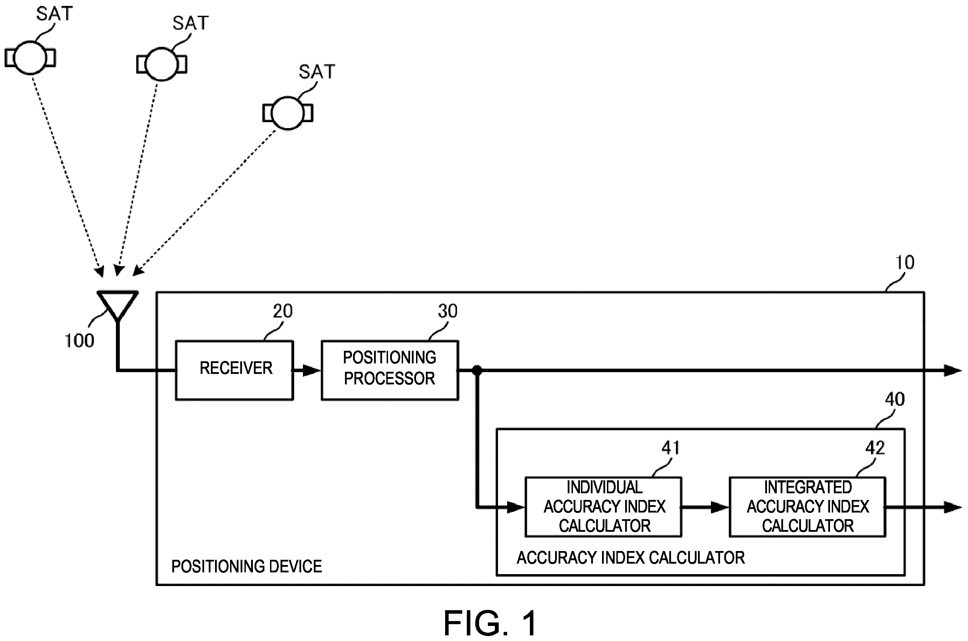

Fig. 1 is a lineblock diagram of a positioning system including a positioning device according to a first embodiment of the present disclosure. As illustrated in Fig. 1, a positioning device 10 includes a receiver 20, a positioning processor 30, and an accuracy index calculator 40. The accuracy index calculator 40 includes an individual accuracy index calculator 41 and an integrated accuracy index calculator 42. The receiver 20, the positioning processor 30, and the accuracy index calculator 40 are constituted by an arithmetic processing unit, such as a CPU, and a positioning program executed by the arithmetic processing unit. The positioning program is stored, for example, in a given storage medium.

An antenna 100 is connected to the receiver 20. The antenna 100 receives positioning signals from a plurality of positioning satellites, and outputs them to the receiver 20.

The plurality of positioning satellites SAT is a plurality of positioning satellites employed by a GNSS (Global Navigation Satellite System). For example, they may include a plurality of positioning satellites employed by the GPS (GPS satellites), a plurality of positioning satellites employed by Galileo (Galileo satellites), and a plurality of positioning satellites employed by BeiDou (BeiDou satellites). The positioning signals may use a carrier signal at a given frequency defined for every system. Each of the plurality of positioning satellites SAT has a unique code, and transmits a signal modulated by this code as the positioning signal.

The receiver 20 acquires and tracks the positioning signal. The receiver 20 outputs to the positioning processor 30 a code pseudo range calculated from a code phase of the positioning signal, while tracking the positioning signal. Further, the receiver 20 outputs an ADR (carrier phase) of the positioning signal to the positioning processor 30, while tracking the positioning signal. Note that the acquiring method of the positioning signal, the tracking method, the calculating method of the code pseudo range, and the calculating method of the ADR are known methods, and the concrete explanation thereof is omitted herein.

The positioning processor 30 performs positioning with the technique of PPP (Precise Point Positioning) using the code pseudo ranges of the plurality of positioning signals (positioning satellites) and ADR. In detail, the positioning processor 30 is constituted by a main filter and a sub filter. The number of main filters is one and the number of sub filters is two or more (for example, six). The main filter and the sub filter are processed in parallel. The plurality of sub filters is also parallelly processed. The main filter and the sub filter are each constituted, for example, by a state estimation filter which uses an error covariance matrix like a Kalman filter.

The positioning result of the main filter is used as a positioning result outputted from the positioning device 10. Note that the positioning result of the main filter is also used for calculation of the accuracy index. The positioning result of the sub filter is used for calculation of the accuracy index.

The positioning result of the main filter is outputted from the positioning device 10 to the individual accuracy index calculator 41. The positioning result of the sub filter is outputted to the individual accuracy index calculator 41.

Note that, here, the positioning processor 30 outputs to the individual accuracy index calculator 41 the error covariance matrix, an ADR residual, and a geometric matrix which are used for positioning calculation.

The individual accuracy index calculator 41 uses the error covariance matrix, the ADR residual, and the geometric matrix which are used for positioning calculation, or the positioning result of the main filter and the positioning result of the sub filter to calculate a plurality of different individual accuracy indexes, respectively.

In detail, the individual accuracy index calculator 41 calculates an accuracy index HPL($\sigma$), an accuracy index HPL(bias), an accuracy index HPL(SS), and an accuracy index HPL($\sigma$ss). The accuracy index HPL($\sigma$) corresponds to a "first accuracy index" of the present disclosure. The accuracy index HPL(bias) corresponds to a "second accuracy index" of the present disclosure. The accuracy index HPL(SS) corresponds to a "third accuracy index" of the present disclosure. The accuracy index HPL($\sigma$ss) corresponds to a "fourth accuracy index" of the present disclosure.

The accuracy index HPL($\sigma$) is calculated using the error covariance matrix. The accuracy index HPL(bias) is calculated using the ADR residual and the geometric matrix. The accuracy index HPL(SS) is calculated using Solution Separation (hereinafter, referred to as "SS") based on the positioning result. The accuracy index HPL($\sigma$ss) is calculated

using the error covariance matrix set without including the positioning satellite(s) which is excluded when calculating the accuracy index HPL(SS).

(Method of Calculating Accuracy Index HPL($\sigma$))

The method of calculating the accuracy index HPL($\sigma$) from the error covariance matrix is known. For example, it is described in the standard of the aviation field: RTCA-DO-229C. Therefore, concrete explanation thereof is omitted herein.

(Method of Calculating Accuracy Index HPL(bias))

Concretely, the individual accuracy index calculator 41 calculates the accuracy index HPL(bias) by the following method.

If an S matrix and a residual vector dy (normally calculated by the method of least squares using the pseudo range) are used to a vector dx (a vector corresponding to a positioning error) indicative of a correction amount based on an initial value of the positioning position and the clock of the positioning device 10, there is the following relationship.

$$dx=Sdy$$

Note that the S matrix is set by a directional cosine matrix Ht defined by the geometric arrangement of the positioning satellite of the received positioning signal, and a given weight matrix W.

A residual dyi of each satellite calculated from the ADR is used to this formula. The residual dyi of this ADR is multiplied by an element corresponding to the S matrix. Thus, while considering the arrangement of the positioning satellite from which the positioning signal is received (the directional cosine matrix corresponding to the geometric matrix), an amount indicative of the influence which the residual dyi of the ADR has on the positioning error (an element dxi corresponding to the dx) is obtained.

Then, an absolute value of this amount (dxi) is added for every positioning satellite from which the positioning signal has been able to be received. Therefore, all the influences the residual dyi of the ADR of each positioning satellite has on the positioning error can be taken into consideration.

(Method of Calculating Accuracy Index HPL(SS))

The individual accuracy index calculator 41 calculates the accuracy index HPL(SS) by the following method.

The individual accuracy index calculator 41 acquires a positioning result Pall by using all the positioning satellites (the positions estimated with the main filter), and positioning results Pex1, Pex2, and Pex3 from which specific positioning satellites are excluded (for example, positioning satellites assumed to be abnormal) (the positions estimated with the sub filter). In the positioning results Pex1, Pex2, and Pex3, the excluded positioning satellites are different from each other.

For example, if the plurality of received positioning satellites include the GPS Satellite, the Galileo satellite, and the BeiDou satellite, the positioning result Pall is the result of positioning using the positioning signals from the GPS Satellite, the Galileo satellite, and the BeiDou satellite.

The positioning result Pex1 is the result of positioning using the positioning signals from the GPS Satellite and the Galileo satellite, excluding the BeiDou satellite. The positioning result Pex2 is the result of positioning using the positioning signals from the GPS satellite and the BeiDou satellite, excluding the Galileo satellite. The positioning result Pex3 is the result of positioning using the positioning signals from the Galileo satellite and the BeiDou satellite, excluding the GPS satellite.

The individual accuracy index calculator 41 calculates a difference $\Delta$lat1 in the north-and-south direction and a difference $\Delta$lon1 in the east-and-west direction between the positioning result Pall and the positioning result Pex1. Then, the individual accuracy index calculator 41 calculates a difference Hdiff1 in the horizontal direction based on the difference $\Delta$lat1 and the difference $\Delta$lon1.

The individual accuracy index calculator 41 calculates a difference $\Delta$lat2 in the north-and-south direction and a difference $\Delta$lon2 in the east-and-west direction between the positioning result Pall and the positioning result Pex2. Then, the individual accuracy index calculator 41 calculates a difference Hdiff2 in the horizontal direction based on the difference $\Delta$lat2 and the difference $\Delta$lon2.

The individual accuracy index calculator 41 calculates a difference $\Delta$lat3 in the north-and-south direction and a difference $\Delta$lon3 in the east-and-west direction between the positioning result Pall and the positioning result Pex3. Then, the individual accuracy index calculator 41 calculates a difference Hdiff3 in the horizontal direction based on the difference $\Delta$lat3 and the difference $\Delta$lon3.

The individual accuracy index calculator 41 compares the difference Hdiff1, the difference Hdiff2, and the difference Hdiff3, and sets the maximum value as the accuracy index HPL(SS).

By using such a method, the individual accuracy index calculator 41 can calculate the accuracy index HPL(SS) with the SS, by the simple processing using the information on the positions of the positioning device.

(Method of Calculating Accuracy Index HPL(σss))

The method of calculating the accuracy index HPL(σss) is similar to the method of calculating the accuracy index HPL(σ) and differs only in the combination of the positioning satellites on which the error covariance matrixes are set.

The individual accuracy index calculator 41 outputs the accuracy index HPL(σ), the accuracy index HPL(bias), the accuracy index HPL(SS), and the accuracy index HPL(σss) to the integrated accuracy index calculator 42.

The integrated accuracy index calculator 42 performs given statistical arithmetic with a combination of the accuracy index HPL(σ), the accuracy index HPL(bias), the accuracy index HPL(SS), and the accuracy index HPL(σss) to calculate the integrated accuracy index.

In detail, the integrated accuracy index calculator 42 calculates a first additional value by adding the accuracy index HPL(σ) to the accuracy index HPL(bias). The integrated accuracy index calculator 42 calculates a second additional value by adding the accuracy index HPL(SS) to the accuracy index HPL(σss). The integrated accuracy index calculator 42 compares the first additional value with the second additional value and calculates the maximum value as the integrated accuracy index.

In other words, the integrated accuracy index calculator 42 calculates the integrated accuracy index by the following formula.

(Integrated Accuracy Index) = MAX (HPL(σ)+HPL(bias), HPL(SS)+HPL(σss))

The positioning device 10 outputs to an external device the positioning result calculated by the positioning processor 30 and the integrated accuracy index calculated by the integrated accuracy index calculator 42.

By such a configuration and processing, the positioning device 10 can calculate the highly-reliable integrated accuracy index.

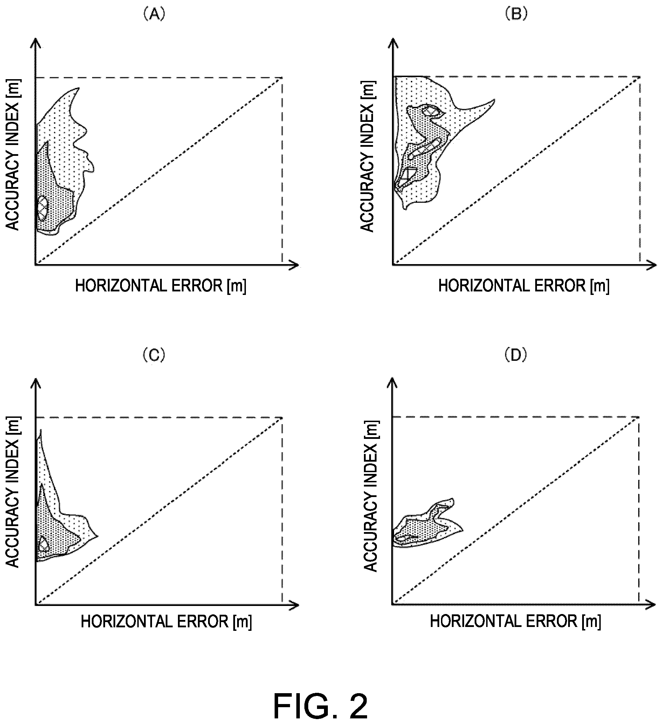

Figs. 2(A), 2(B), 2(C), and 2(D) are Stamford diagrams illustrating a relationship between the horizontal error and the accuracy index. Figs. 2(A) and 2(B) illustrate the cases of the present disclosure, where the accuracy index is the integrated accuracy index calculated as described above. Figs. 2(C) and 2(D) illustrate comparative configurations, where the accuracy index is the accuracy index which only uses the error covariance matrix.

Figs. 2(A) and 2(C) illustrate the cases where the abnormal value is not mixed into the pseudo range and the ADR, and Figs. 2(B) and 2(D) illustrate the cases where the abnormal value is mixed into the pseudo range and the ADR.

As illustrated in Fig. 2(A), when the abnormal value is not mixed into the pseudo range and the ADR, the accuracy index of the present disclosure (integrated accuracy index) becomes larger than the actual positioning error (horizontal error), similarly to the conventional accuracy index (see Fig. 2(C)).

Further, as illustrated in Fig. 2(B), when the abnormal value is mixed into the pseudo range and the ADR and the actual positioning error (horizontal error) increases, the accuracy index of the present disclosure (integrated accuracy index) is also shifted in a direction in which the accuracy index increases accordingly. Then, the accuracy index of the present disclosure (integrated accuracy index) becomes larger than the positioning error (horizontal error), maintaining this relation.

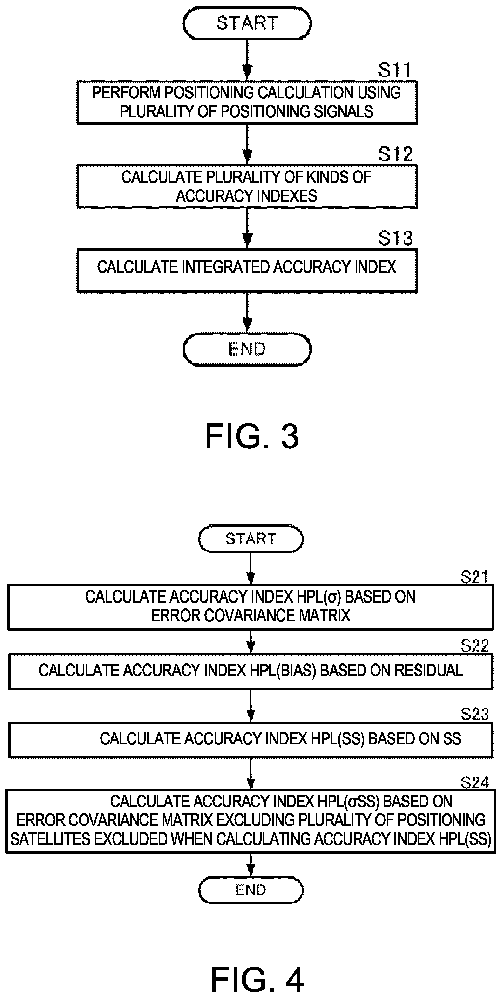

On the other hand, as illustrated in Fig. 3(D), even if the actual positioning error (horizontal error) increases, the accuracy index of the comparative configuration does not become large accordingly.

Thus, the accuracy index of the present disclosure (integrated accuracy index) can reflect the actual positioning error and the changes in the actual positioning error with high precision. Therefore, the accuracy index of the present disclosure (integrated accuracy index) turns into the highly-reliable accuracy index conforming to the actual positioning error.

(Positioning Method)

(Main flow)

Fig. 3 is a flowchart illustrating a positioning method according to the first embodiment of the present disclosure. Note that, in the following explanation of the positioning method, the same concrete explanation as the above-described positioning device 10 is omitted herein.

The positioning processor 30 of the positioning device 10 performs the positioning calculation using the plurality of positioning signals (S11). The individual accuracy index calculator 41 of the positioning device 10 calculates a plurality of kinds of accuracy indexes (S12). The integrated accuracy index calculator 42 of the positioning device 10 calculates the integrated accuracy index using the plurality of kinds of accuracy indexes (S13).

(Calculation Flow of Individual Accuracy Index)

Fig. 4 is a flowchart illustrating a method of calculating the individual accuracy index according to the first embodiment of the present disclosure.

The individual accuracy index calculator 41 calculates the accuracy index HPL($\sigma$) based on the error covariance matrix (S21). The individual accuracy index calculator 41 calculates the accuracy index HPL(bias) based on the residual (S22). The individual accuracy index calculator 41 calculates the accuracy index HPL(SS) based on the SS. The individual accuracy index calculator 41 calculates the accuracy index HPL($\sigma$ss) based on the error covariance matrix from which the plurality of positioning satellites, which are excluded when calculating the accuracy index HPL(SS), are excluded.

(Calculation Flow of Integrated Accuracy Index)

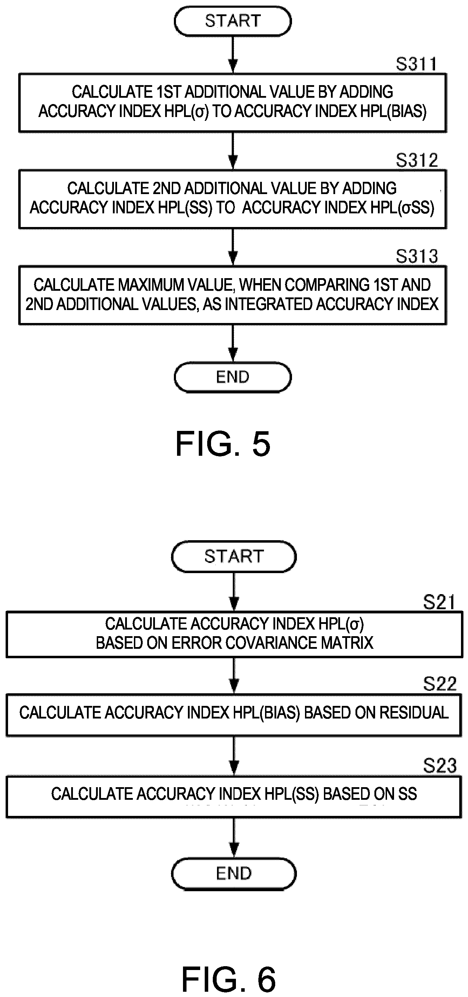

Fig. 5 is a flowchart illustrating a method of calculating the integrated accuracy index according to the first embodiment of the present disclosure.

The integrated accuracy index calculator 42 calculates the first additional value by adding the accuracy index HPL($\sigma$) to the accuracy index HPL(bias) (S311). The integrated accuracy index calculator 42 calculates the second additional value by adding the accuracy index HPL(SS) to the accuracy index HPL($\sigma$ss) (S312). The integrated accuracy index calculator 42 compares the first additional value with the second additional value, and calculates the maximum value as the integrated accuracy index.

Note that the method of calculating the conventional accuracy index includes:

(A) Accuracy index of RAIM algorithm;
(B) Accuracy index of ARAIM algorithm;
(C) Accuracy index only using the error covariance matrix;
(D) Accuracy index only using the residual; and
(E) Accuracy index only using the SS.

However, according to the conventional methods (A)-(E), each method uses the independent accuracy index, and therefore, it is difficult to acquire the high reliability as compared with the accuracy index calculated by the method of the present disclosure.

On the other hand, the present disclosure calculates the plurality of kinds of accuracy indexes using each matrix and the observed value which are used for positioning, and calculates the final accuracy index (integrated accuracy index), while suitably combining the advantage of each accuracy index which contributes to the improvement in the accuracy index. Therefore, in the present disclosure, the highly-reliable accuracy index can be calculated as compared with the conventional accuracy index.

Further, according to the conventional methods illustrated in (A), (B), and (E), calculation processing of the accuracy index becomes complicated as compared with the method of the present disclosure. However, the present disclosure can simplify the calculation of the plurality of accuracy indexes, while hardly deteriorating the accuracy indexes. In addition, in the present disclosure, the integrated accuracy index is calculated from the plurality of accuracy indexes by the comparatively simple algebra calculation. Therefore, the present disclosure can calculate the highly-reliable accuracy index, while suppressing the significant increase in the processing load.

[SECOND EMBODIMENT]

A positioning technique according to a second embodiment of the present disclosure is described with reference to the drawings. The positioning technique according to the second embodiment differs from the positioning technique according to the first embodiment in the method of calculating the individual accuracy index and the method of calculating the integrated accuracy index. Other parts of the positioning technique according to the second embodiment are similar to those of the positioning technique according to the first embodiment, and therefore, explanation of the similar parts is omitted.

(Calculation Flow of Individual Accuracy Index)

Fig. 6 is a flowchart illustrating a method of calculating the individual accuracy index according to the second embodiment of the present disclosure.

The individual accuracy index calculator 41 calculates the accuracy index HPL($\sigma$) based on the error covariance matrix (S21). The individual accuracy index calculator 41 calculates the accuracy index HPL(bias) based on the residual (S22). The individual accuracy index calculator 41 calculates the accuracy index HPL(SS) based on the SS.

(Calculation Flow of Integrated Accuracy Index)

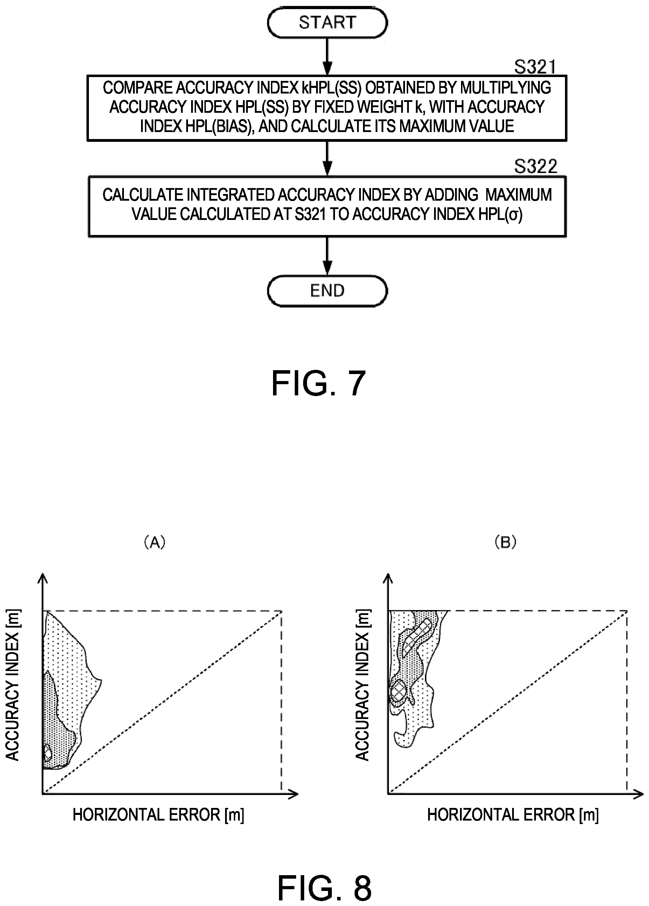

Fig. 7 is a flowchart illustrating a method of calculating the integrated accuracy index according to the second embodiment of the present disclosure.

The integrated accuracy index calculator 42 compares an accuracy index kHPL(SS), which is obtained by multiplying the accuracy index HPL(SS) by a fixed weight k, with the accuracy index HPL(bias), and calculates its maximum value (S321). The integrated accuracy index calculator 42 calculates the integrated accuracy index by adding the maximum value calculated at S321 to the accuracy index HPL($\sigma$) (S322).

That is, in the second embodiment, the integrated accuracy index calculator 42 calculates the integrated accuracy index by the following formula. Note that, in the following formula, k is a weighting coefficient.

$$\text{(Integrated Accuracy Index)} = \text{HPL}(\sigma) + \text{MAX}\,(\text{HPL(bias)}, \text{kHPL(SS)})$$

According to such a method, the positioning device 10 can also calculate the highly-reliable accuracy index.

Figs. 8(A) and 8(B) are Stamford diagrams illustrating a relationship between the horizontal error and the accuracy index in the configuration of the second embodiment. Fig. 8(A) illustrates the case where the abnormal value is not mixed into the pseudo range and the ADR, and Fig. 8(B) illustrates the case where the abnormal value is mixed into the pseudo range and the ADR.

As illustrated in Figs. 8(A) and 8(B), by using the configuration of the second embodiment, the actual positioning error and the changes in the positioning error can be reflected with high precision, similarly to the first embodiment. Therefore, the accuracy index of this embodiment (integrated accuracy index) turns into the highly-reliable accuracy index conforming to the actual positioning error.

[THIRD EMBODIMENT]

A positioning technique according to a third embodiment of the present disclosure is described with reference to the drawings. The positioning technique according to the third embodiment differs from the positioning technique according to the first embodiment in the method of calculating the accuracy index HPL(SS). Other parts of the positioning technique according to the third embodiment are similar to those of the positioning technique according to the first embodiment, and therefore, explanation of the similar parts is omitted.

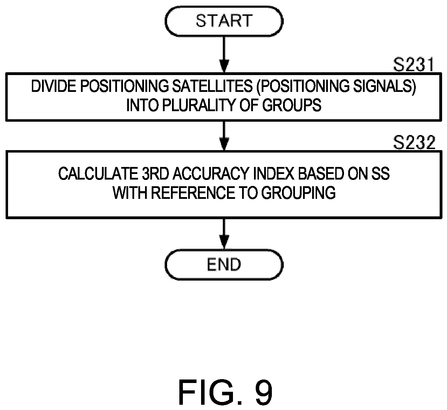

Fig. 9 is a flowchart illustrating one example of a method of calculating the individual accuracy index according to the third embodiment.

As illustrated in Fig. 9, the positioning processor 30 divides the positioning satellites (positioning signals) into a plurality of groups (S231). For example, the first group is a group from which the positioning satellite(s) with the satellite number of GPS being the multiple of 3 is excluded. The second group is a group from which the positioning satellite(s) with the satellite number of GPS being the multiple of 3 plus 1 (+1) is excluded. The third group is a group from which the positioning satellite(s) with the satellite number of GPS being the multiple of 3 plus 2 (+2) is excluded. The fourth group is a group from which the positioning satellite(s) with the satellite number of Galileo being the multiple of 3 is excluded. The fifth group is a group from which the positioning satellite(s) with the satellite number of Galileo being the multiple of 3 plus 1 (+1) is excluded. The sixth group is a group from which the positioning satellite(s) with the satellite number of Galileo being the multiple of 3 plus 2 (+2) is excluded.

The individual accuracy index calculator 41 calculates HPL(SS) with reference to the grouping (S232). In detail, the individual accuracy index calculator 41 calculates a difference between the positioning result (calculated position) by all the received positioning signals (positioning satellites) and the positioning result by the positioning signals of the first group (positioning satellites), as a first difference value. Similarly, the individual accuracy index calculator calculates a difference between the positioning result (calculated position) by all the received positioning signals (positioning satellites) and the positioning result by the positioning signals of the $i^{th}$ group (positioning satellites), as the $i^{th}$ difference value (here, i= 2 to 6).

Then, the individual accuracy index calculator 41 compares from the first difference value to the sixth difference value, and sets the maximum value as the accuracy index HPL(SS).

By using such a method, the positioning device 10 can calculate the highly-reliable accuracy index, even if it cannot use the positioning signal of the specific system. For example, in the Galileo system, PPP correction information on the GPS and Galileo satellites are distributed (Galileo High Accuracy Service). In this case, the PPP correction information on the BeiDou satellite is not acquired.

In such a case, the positioning signal of the BeiDou satellite cannot be used for the calculation of the accuracy index HPL(SS). However, by using the configuration (method) of the third embodiment, the positioning device 10 can calculate the highly-reliable accuracy index, without using the positioning signal of the BeiDou satellite.

[FOURTH EMBODIMENT]

A positioning technique according to a fourth embodiment of the present disclosure is described with reference to the drawings. The positioning technique according to the fourth embodiment differs from the positioning technique according to the third embodiment in the processing with the sub filter and the calculation processing of the accuracy index HPL(SS). Other parts of the positioning technique according to the fourth embodiment are similar to those of the positioning technique according to the third embodiment, and therefore, explanation of the similar parts is omitted.

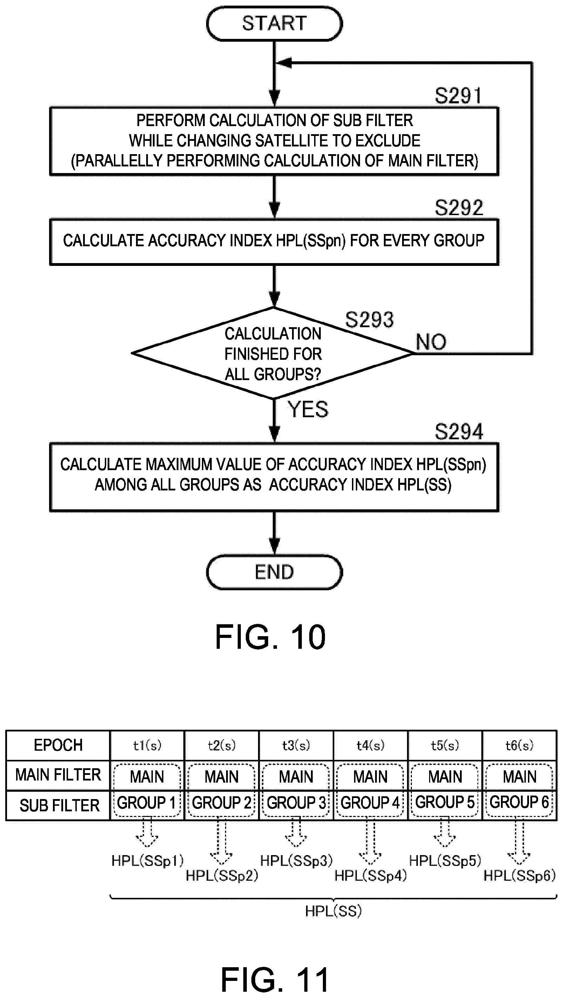

Fig. 10 is a flowchart illustrating one example of a method of calculating the individual accuracy index according to the fourth embodiment. Fig. 11 is a view illustrating the concept of processing of the sub filter and the calculation concept of the accuracy index HPL(SS) according to the fourth embodiment.

In the positioning device 10 according to the fourth embodiment, the positioning processor 30 is constituted by one main filter and one sub filter.

The sub filter of the positioning processor 30 performs the positioning calculation for every group, while changing the positioning satellite to exclude (i.e., while changing the group of positioning satellites illustrated in the third embodiment) (S291). Here, the main filter of the positioning processor 30 performs the positioning calculation using all the received positioning signals (all the positioning satellites).

The individual accuracy index calculator 41 calculates an accuracy index HPL(SSpn) for every group (S292).

The positioning device 10 repeats the calculation of the accuracy index HPL(SSpn) for every group, while changing the group, until it calculates the accuracy indexes HPL(SSpn) of all the groups (S293: NO).

For example, as illustrated in Fig. 11, in epoch t1(s), the sub filter calculates an accuracy index HPL(SSp1) from the positioning result of all the positioning signals and the positioning result of the positioning signals of the first group. Similarly, in epoch ti(s), the sub filter calculates an accuracy index HPL(SSpi) from the positioning result of all the positioning signals and the positioning result of the positioning signals of the $i^{th}$ group (here, i= 2 to 6).

When the calculation of the accuracy indexes HPL(SSpn) of all the groups is finished (S293: YES), the individual accuracy index calculator 41 compares the accuracy indexes HPL(SSpn) of all the groups, and sets the maximum value as the accuracy index HPL(SS) (S294). For example, in the case of Fig. 11, the individual accuracy index calculator 41 compares the accuracy index HPL(SSp1), the accuracy index HPL(SSp2), the accuracy index HPL(SSp3), the accuracy index HPL(SSp4), the accuracy index HPL(SSp5), and the accuracy index HPL(SSp6), and sets the maximum value as the accuracy index HPL(SS).

By performing such processing with such a configuration, the number of sub filters used for the accuracy index can be reduced. Therefore, the positioning device 10 can reduce the resource and calculation load.

Note that the above-described configuration and processing of each embodiment may be combined suitably, and each combination may provide peculiar operation and effects.

The PPP (precision independent positioning) which uses the code pseudo range and the carrier phase is described above. However, the above-described configuration and processing are also applicable to the accuracy index of code positioning only using the code pseudo range.

The calculation of the integrated accuracy index by suitably combining the plurality of kinds of accuracy indexes (individual accuracy indexes) is described above. However, it is also possible to calculate the integrated accuracy index by simply adding the plurality of accuracy indexes (individual accuracy indexes).

DESCRIPTION OF REFERENCE CHARACTERS

10: Positioning Device
20: Receiver
30: Positioning Processor
40: Accuracy Index Calculator
41: Individual Accuracy Index Calculator
42: Integrated Accuracy Index Calculator
100: Antenna

**Claims**

1. A positioning device, comprising:

   a receiver configured to receive positioning signals from a plurality of positioning satellites;
   a positioning processor configured to perform positioning calculation using the received positioning signals;
   an individual accuracy index calculator configured to calculate a plurality of different individual accuracy indexes based on an error covariance matrix used for the positioning calculation, an observed value by the positioning signal, or a positioning result by the positioning calculation, respectively; and
   an integrated accuracy index calculator configured to calculate an integrated accuracy index using the plurality of individual accuracy indexes.

2. The positioning device of claim 1, wherein the integrated accuracy index calculator calculates a plurality of kinds of additional values by adding up a plurality of combinations of the individual accuracy indexes, and
   wherein the integrated accuracy index calculator calculates the maximum value of the plurality of kinds of additional values, and uses the maximum value as the integrated accuracy index.

3. The positioning device of claim 2, wherein the individual accuracy index calculator calculates, as the plurality of individual accuracy indexes,

   a first accuracy index using the error covariance matrix,
   a second accuracy index using a residual based on a carrier phase of the positioning signal, and
   a third accuracy index using Solution Separation based on the positioning result.

4. The positioning device of claim 3, wherein the individual accuracy index calculator calculates a fourth accuracy index using the error covariance matrix from which the plurality of positioning satellites excluded when calculating the third accuracy index are excluded, and
   wherein the integrated accuracy index calculator calculates a first additional value obtained by adding the first accuracy index to the second accuracy index, and a second additional value obtained by adding the third accuracy index to the fourth accuracy index, and sets the maximum value when comparing the first additional value with the second additional value, as the integrated accuracy index.

5. The positioning device of claim 3, wherein the integrated accuracy index calculator calculates the integrated accuracy index by adding the first accuracy index to the maximum value when comparing the second accuracy index with the third accuracy index.

6. The positioning device of any one of claims 3 to 5, wherein the individual accuracy index calculator calculates a degree of influence to the positioning error by the residual and a geometric arrangement of the positioning satellites corresponding to the residual, for the plurality of positioning satellites, and
   wherein the individual accuracy index calculator calculates the second accuracy index using the degrees of influence of the plurality of positioning satellites.

7. The positioning device of any one of claims 3 to 6, wherein the positioning processor sets a plurality of kinds of groups of positioning satellites from which different specific positioning satellites are excluded from all the positioning satellites of the plurality of positioning satellites, and the positioning processor calculates positioning results by the positioning signals of the all positioning satellites and positioning results by the positioning signals of the plurality of kinds of groups of positioning satellites, and
   wherein the individual accuracy index calculator calculates differences between the positioning results by the positioning signals of the all positioning satellites and the positioning results by the positioning signals of the plurality of kinds of groups of positioning satellites, respectively, and calculates the third accuracy index using the difference for every group.

8. The positioning device of claim 7, wherein the plurality of positioning satellites to exclude are set per system of GNSS.

9. The positioning device of claim 7, wherein the plurality of positioning satellites to exclude are set based on a satellite number of the corresponding system of GNSS.

10. The positioning device of any one of claims 7 to 9, wherein the positioning processor includes:

a main processor configured to perform positioning calculation using the positioning signals from the all positioning satellites; and

a sub processor configured to perform positioning calculation using the positioning signals from the plurality of kinds of groups of positioning satellites from which the specific positioning satellites are excluded, and

wherein the sub processor is a processor common to the plurality of kinds of groups, and sequentially performs the positioning calculation using the positioning signals from the plurality of kinds of groups of positioning satellites for every group.

11. The positioning device of claim 1, wherein the integrated accuracy index calculator calculates the integrated accuracy index by adding the plurality of individual accuracy indexes.

12. A positioning method, comprising steps of:

receiving positioning signals from a plurality of positioning satellites;

performing positioning calculation using the received positioning signals;

calculating a plurality of different individual accuracy indexes based on an error covariance matrix used for the positioning calculation, an observed value by the positioning signal, or a positioning result by the positioning calculation, respectively, and

calculating an integrated accuracy index using the plurality of individual accuracy indexes.

13. A positioning program configured to cause an arithmetic processing unit to perform processing, the processing comprising:

receiving positioning signals from a plurality of positioning satellites;

performing positioning calculation using the received positioning signals;

calculating a plurality of different individual accuracy indexes based on an error covariance matrix used for the positioning calculation, an observed value by the positioning signal, or a positioning result by the positioning calculation, respectively, and

calculating an integrated accuracy index using the plurality of individual accuracy indexes.

FIG. 1

EP 4 535 041 A1

(A)

(B)

(C)

(D)

FIG. 2

START

**S11**

PERFORM POSITIONING CALCULATION USING PLURALITY OF POSITIONING SIGNALS

**S12**

CALCULATE PLURALITY OF KINDS OF ACCURACY INDEXES

**S13**

CALCULATE INTEGRATED ACCURACY INDEX

END

FIG. 3

START

**S21**

CALCULATE ACCURACY INDEX HPL($\sigma$) BASED ON ERROR COVARIANCE MATRIX

**S22**

CALCULATE ACCURACY INDEX HPL(BIAS) BASED ON RESIDUAL

**S23**

CALCULATE ACCURACY INDEX HPL(SS) BASED ON SS

**S24**

CALCULATE ACCURACY INDEX HPL($\sigma$SS) BASED ON ERROR COVARIANCE MATRIX EXCLUDING PLURALITY OF POSITIONING SATELLITES EXCLUDED WHEN CALCULATING ACCURACY INDEX HPL(SS)

END

FIG. 4

START

CALCULATE 1ST ADDITIONAL VALUE BY ADDING
ACCURACY INDEX HPL(σ) TO ACCURACY INDEX HPL(BIAS)    S311

CALCULATE 2ND ADDITIONAL VALUE BY ADDING
ACCURACY INDEX HPL(SS) TO ACCURACY INDEX HPL(σSS)    S312

CALCULATE MAXIMUM VALUE, WHEN COMPARING 1ST AND
2ND ADDITIONAL VALUES, AS INTEGRATED ACCURACY INDEX    S313

END

# FIG. 5

START

CALCULATE ACCURACY INDEX HPL(σ)
BASED ON ERROR COVARIANCE MATRIX    S21

CALCULATE ACCURACY INDEX HPL(BIAS) BASED ON RESIDUAL    S22

CALCULATE ACCURACY INDEX HPL(SS) BASED ON SS    S23

END

# FIG. 6

START

S321

COMPARE ACCURACY INDEX kHPL(SS) OBTAINED BY MULTIPLYING ACCURACY INDEX HPL(SS) BY FIXED WEIGHT k, WITH ACCURACY INDEX HPL(BIAS), AND CALCULATE ITS MAXIMUM VALUE

S322

CALCULATE INTEGRATED ACCURACY INDEX BY ADDING MAXIMUM VALUE CALCULATED AT S321 TO ACCURACY INDEX HPL(σ)

END

FIG. 7

(A)

ACCURACY INDEX [m]

HORIZONTAL ERROR [m]

(B)

ACCURACY INDEX [m]

HORIZONTAL ERROR [m]

FIG. 8

START

S231

DIVIDE POSITIONING SATELLITES (POSITIONING SIGNALS)
INTO PLURALITY OF GROUPS

S232

CALCULATE 3RD ACCURACY INDEX BASED ON SS
WITH REFERENCE TO GROUPING

END

# FIG. 9

START

PERFORM CALCULATION OF SUB FILTER
WHILE CHANGING SATELLITE TO EXCLUDE
(PARALLELLY PERFORMING CALCULATION OF MAIN FILTER)

S291

CALCULATE ACCURACY INDEX HPL(SSpn) FOR EVERY GROUP

S292

CALCULATION FINISHED FOR ALL GROUPS?  S293  NO

YES

CALCULATE MAXIMUM VALUE OF ACCURACY INDEX HPL(SSpn)
AMONG ALL GROUPS AS ACCURACY INDEX HPL(SS)

S294

END

FIG. 10

| EPOCH | t1(s) | t2(s) | t3(s) | t4(s) | t5(s) | t6(s) |
|---|---|---|---|---|---|---|
| MAIN FILTER | MAIN | MAIN | MAIN | MAIN | MAIN | MAIN |
| SUB FILTER | GROUP 1 | GROUP 2 | GROUP 3 | GROUP 4 | GROUP 5 | GROUP 6 |

HPL(SSp1)   HPL(SSp2)   HPL(SSp3)   HPL(SSp4)   HPL(SSp5)   HPL(SSp6)

HPL(SS)

FIG. 11

## INTERNATIONAL SEARCH REPORT

| | International application No. |
|---|---|
| | **PCT/JP2023/016179** |

**A. CLASSIFICATION OF SUBJECT MATTER**

*G01S 19/20*(2010.01)i; *G01S 19/23*(2010.01)i
FI: G01S19/23; G01S19/20

According to International Patent Classification (IPC) or to both national classification and IPC

**B. FIELDS SEARCHED**

Minimum documentation searched (classification system followed by classification symbols)

G01S 5/00 - G01S 5/14; G01S 19/00 - G01S 19/55

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-518466 A (QUALCOMM INC.) 10 August 2006 (2006-08-10) paragraphs [0001], [0006], [0021]-[0043], fig. 3-9 | 1-2, 11-13 |
| A | | 3-10 |
| Y | WO 2020/066155 A1 (NEC SOLUTION INNOVATORS LTD.) 02 April 2020 (2020-04-02) paragraphs [0014]-[0060], fig. 1-6 | 1-2, 11-13 |
| A | | 3-10 |
| Y | JP 2019-138911 A (ROBERT BOSCH GMBH) 22 August 2019 (2019-08-22) paragraphs [0057]-[0060], fig. 5 | 1-2, 11-13 |
| A | | 3-10 |
| Y | JP 2017-173137 A (NEC CORP.) 28 September 2017 (2017-09-28) paragraphs [0030]-[0034], [0038] | 1-2, 11-13 |
| A | | 3-10 |

☑ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 June 2023** | **04 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/016179** |

**C.      DOCUMENTS CONSIDERED TO BE RELEVANT**

| Category* | Citation of document, with indication, where appropriate, of the relevant passages | Relevant to claim No. |
| --- | --- | --- |
| Y | JP 2008-209227 A (TOYOTA JIDOSHA KABUSHIKI KAISHA) 11 September 2008 (2008-09-11)<br>       paragraphs [0047]-[0049] | 1-2, 11-13 |
| A | | 3-10 |
| A | US 9369896 B1 (GOOGLE INC.) 14 June 2016 (2016-06-14)<br>       entire text, all drawings | 1-13 |
| A | 高山洋史ほか. 幾何学モデルを用いたNLOS信号排除による都市部におけるGNSS/INSの測位精度改善. システム制御情報学会論文誌. 15 February 2021, vol. 34, no. 2, pp. 37-46, ISSN: 1342-5668, (TAKAYAMA, Yoji et al. Accuracy Enhancement of GNSS/INS Positioning in Dense Urban Environments with NLOS Signal Rejection based on Geometric Model. Transactions of the Institute of Systems, Control and Information Engineers.)<br>       entire text, all drawings | 1-13 |
| A | ASARI, Koki et al. RTK-PPP: Social Requirement and National Solution. Proceedings of the 28th International Technical Meeting of The Satellite Division of the Institute of Navigation (ION GNSS+ 2015), Institute of Navigation, 18 September 2015, pp. 1159-1173<br>       entire text, all drawings | 1-13 |

Form PCT/ISA/210 (second sheet) (January 2015)

## INTERNATIONAL SEARCH REPORT
### Information on patent family members

International application No.

**PCT/JP2023/016179**

| Patent document cited in search report | | | Publication date (day/month/year) | Patent family member(s) | | | Publication date (day/month/year) |
|---|---|---|---|---|---|---|---|
| JP | 2006-518466 | A | 10 August 2006 | US | 2004/0160365 | A1 | |
| | | | | paragraphs [0001], [0006], [0031]-[0052], fig. 3-9 | | | |
| | | | | WO | 2004/075016 | A2 | |
| | | | | EP | 2523014 | A1 | |
| | | | | KR | 10-2005-0099625 | A | |
| | | | | CN | 1761887 | A | |
| WO | 2020/066155 | A1 | 02 April 2020 | US | 2021/0349220 | A1 | |
| | | | | paragraphs [0019]-[0067], fig. 1-6 | | | |
| | | | | CN | 112673281 | A | |
| JP | 2019-138911 | A | 22 August 2019 | US | 2019/0250278 | A1 | |
| | | | | paragraphs [0069]-[0072], fig. 5 | | | |
| | | | | EP | 3528008 | A1 | |
| | | | | DE | 102018202223 | A1 | |
| | | | | CN | 110161535 | A | |
| | | | | KR | 10-2019-0098707 | A | |
| JP | 2017-173137 | A | 28 September 2017 | US | 2019/0101653 | A1 | |
| | | | | paragraphs [0045]-[0049], [0055] | | | |
| | | | | WO | 2017/164118 | A1 | |
| JP | 2008-209227 | A | 11 September 2008 | US | 2010/0026566 | A1 | |
| | | | | paragraphs [0080]-[0086] | | | |
| | | | | WO | 2008/108194 | A2 | |
| | | | | KR | 10-2009-0074049 | A | |
| | | | | CN | 101606080 | A | |
| US | 9369896 | B1 | 14 June 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10466362 B1